(19) Europäisches Patentamt
European Patent Office
Office européen des brevets

(11) **EP 1 760 894 A2**

(12) **EUROPEAN PATENT APPLICATION**

(43) Date of publication:
**07.03.2007 Bulletin 2007/10**

(51) Int Cl.:
***H04B 1/16*** *(2006.01)*

(21) Application number: **06119589.7**

(22) Date of filing: **25.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.09.2005 KR 20050081464**

(71) Applicant: **SAMSUNG ELECTRONICS CO., LTD.
Suwon-si,
Gyeonggi-do 442-742 (KR)**

(72) Inventors:
• **Joung, Gyong-jin
Budang-gu, Gyeonggi-do
Suwon-si (KR)**
• **Suh, Sang-bum
Seocho-gu
Seoul (KR)**

(74) Representative: **Waddington, Richard
15 Clare Road
Halifax,
West Yorkshire HX1 2HY (GB)**

(54) **Method and Apparatus for Controlling Power Consumption of Portable Devices connected to Wireless Network**

(57) A method of and apparatus for controlling power consumption in a wireless device (100) that transmits and receives data to and from another wireless device based on a predetermined unit time, includes receiving at least one data frame from the other wireless device within the range of a maximum reception mode time, transmitting at least one data to the other wireless device at an adjusted transmission rate according to traffic requirements or status information of the portable wireless device (100), and switching a current mode of the portable wireless device (100) to a doze mode for a remaining time of the unit time.

## FIG. 2

**EP 1 760 894 A2**

**Description**

The present invention relates to a technology for a wireless local area network (LAN) and, more particularly, to a method of and an apparatus for reducing power consumption in portable devices connected to a wireless LAN.

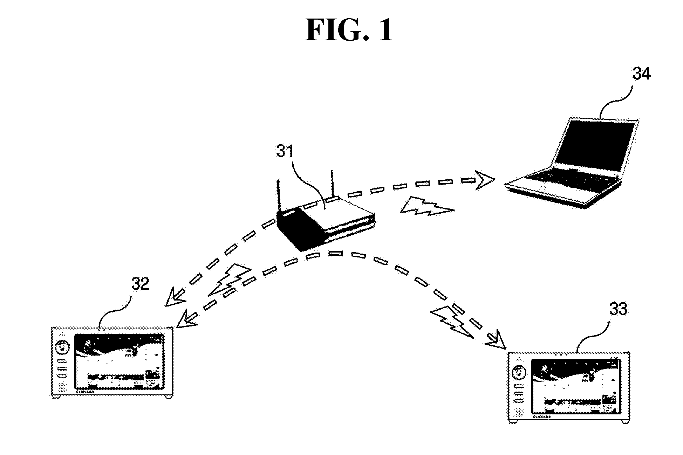

FIG. 1 illustrates the configuration of a wireless LAN implemented with a conventional general infrastructure. Referring to FIG. 1, a plurality of portable devices 32, 33 and 34 can transmit and receive data through an access point (AP) 31 using the IEEE 802.11 series standard. Examples of the portable devices include a personal computer, a notebook computer, a cellular phone, and a personal digital assistant (PDA). The portable device 32 can transmit and receive data to and from another portable device 33 through a protocol under the IEEE 802.11 series standard. Also, the portable device 32 allows users to conduct voice communication with a notebook computer 34 by transmitting and receiving a VoIP packet to and from the notebook computer 34.

Generally, such portable devices connected to a wireless LAN constantly require a stable power supply to operate on a high-speed wireless LAN. However, since the portable devices are typically powered by a compact battery having a limited capacity, it is becoming increasingly important to reduce power consumption in these devices.

Examples of conventional methods of reducing power consumption in wireless portable devices are disclosed in Korean Unexamined Patent Publication Nos. 2001-075670 and 1999-065379, and U.S. Patent No. 5,355,518.

Korean Unexamined Patent Publication No. 2001-075670 discloses a method of reducing battery power consumption in a communication system, which includes determining whether a received and demodulated signal can be decoded, cutting off power supplied to a receiver if the signal cannot be decoded, and operating the receiver if the signal can be decoded. Also, Korean Unexamined Patent Publication No. 1999-065379 discloses a wireless call system that determines whether a data arrangement is set in a previously set manner using a time slot number included in the header arrangement of a signal transmitted from a prior call system, and turns on a radio frequency (RF) module by supplying power if the data arrangement is set in the previous set manner. U.S. Patent No. 5,355,518 discloses a receiver having a power-saving circuit that monitors channels in a power-saving mode to maintain the receiver either in a sleep mode or an operating mode, depending on whether an effective coded squelch signal (CSS) has been detected.

However, the above-mentioned conventional methods have several problems, in that the conventional methods have been focused either on minimizing the power required during the data transmission or on a method of reducing duty-cycle by collecting idle time information and converting the operating mode of portable devices into a doze mode during the idle time. Thus, traffic requirements of an application program are not considered. Rather, emphasis has been put on optimizing data transmission or data reception. For this reason, it is difficult to reduce power consumption in the overall wireless system.

The present invention provides a method of and apparatus for reducing power consumption in portable devices connected to a wireless local area network implemented with an IEEE 802.11 Distributed Coordination Function (DCF) standard.

According to the present invention there is provided an apparatus and method as set forth in the appended claims. Preferred features of the invention will be apparent from the dependent claims, and the description which follows.

According to an aspect of the present invention there is provided a method of controlling power consumption in a portable wireless device that is operable to transmit and receive data to and from another portable wireless device in a predetermined unit time. The method includes a) receiving at least one data frame from the other portable wireless device within a range of a maximum reception mode time, b) transmitting at least one data frame to the other portable wireless device at an adjusted transmission rate according to traffic requirements or status information of the portable wireless device, and c) switching a current mode of the portable wireless device to a doze mode for a remaining time of the predetermined unit time, after operations a) and b) have been performed.

According to another aspect of the present invention, there is provided a portable wireless device that is operable to transmit and receive data to and from another wireless device in a predetermined unit time. The portable wireless device includes means for receiving at least one data frame from the other portable wireless device within a range of a maximum reception mode time, means for transmitting at least one data frame to the other portable wireless device at an adjusted transmission rate according to traffic requirements or status information of the portable wireless device, and means for switching a current mode of the portable wireless device to a doze mode for a remaining time of the predetermined unit time, after the data have been received and transmitted.

For a better understanding of the invention, and to show how embodiments of the same may be carried into effect, reference will now be made, by way of example, to the accompanying diagrammatic drawings in which:

FIG. 1 illustrates the configuration of a wireless LAN implemented with a conventional general infrastructure;

FIG. 2 is a block diagram illustrating the configuration of a portable wireless device according to an exemplary embodiment of the present invention;

FIG. 3 illustrates the configuration of a wireless LAN modem according to an exemplary embodiment of the present invention;

FIG. 4 illustrates operation of a portable wireless device during a unit time period;

FIG. 5 is a flowchart illustrating a method of setting an energy-performance table;

FIG. 6 illustrates an example of tuples displayed in a coordinate plane;

FIG. 7 illustrates an example of data transmission and reception when both RTS/CTS frame exchange and fragmentation are not performed;

FIG. 8 illustrates an example of data transmission and reception when only RTS/CTS frame exchange is performed;

FIG. 9 illustrates an example of data transmission and reception when only RTS/CTS frame fragmentation is performed;

FIG. 10 illustrates an example of data transmission and reception when both RTS/CTS frame exchange and fragmentation are performed; and

FIG. 11 is a flowchart illustrating a method of controlling power consumption in a portable wireless device, according to an exemplary embodiment of the present invention.

Having regard to the problems set out in the introduction, it has been realised that a method of controlling power consumption during data transmission and reducing the duty-cycle of a portable device is desired, in which minimized power is used during the data transmission according to the traffic requirements of an application program and a power saving time is calculated within the range of the traffic requirements to switch the portable device into a doze mode.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in various forms. The matters defined in the description, such as the detailed construction and elements, are specific details provided to assist those of ordinary skill in the art in a comprehensive understanding of the invention, and the present invention is only defined within the scope of appended claims. In the whole description of the present invention, the same drawing reference numerals are used to indicate the same or similar elements across various figures.

A portable wireless device according to an exemplary embodiment of the present invention operates under IEEE 802.11 DCF mode. The portable wireless device receives data transmission and reception requirements from an application program, defines a maximum delay time as a unit time, transmits a PS-Poll frame to an access point (AP), and receives data buffered in the AP. If there is no more data buffered in the AP, the portable wireless device transmits the buffered data.

After the portable wireless device completes data transmission, if a time excluding a time required for data transmission and reception (a remaining time) within the unit time is greater than a predetermined threshold time, a wireless LAN modem provided in the portable wireless device is switched to a doze mode for the duration of the remaining time. An actual transmission rate and an actual reception rate are continuously measured so that data is transmitted at an adjusted transmission rate if there is a difference between the traffic requirements of the application program and the measured transmission and reception rates. Furthermore, the portable wireless device is set according to various kinds of status information provided from the wireless LAN modem and by referring to an energy-performance table optimally set for a wireless LAN. Thus, the portable wireless device transmits data using minimum power during data transmission.

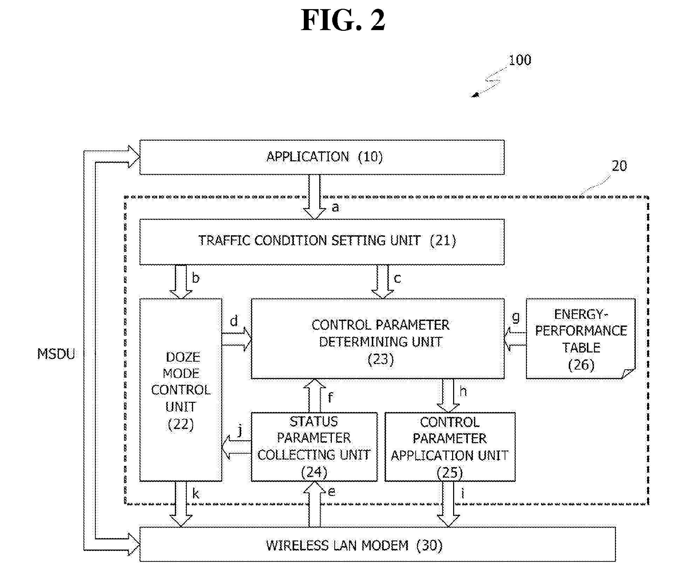

FIG. 2 is a block diagram illustrating the configuration of a portable wireless device 100 according to an exemplary embodiment of the present invention. Referring to FIG. 2, the portable wireless device 100 includes an application 10, a wireless LAN modem 30, and a power-management module 20 provided between the application 10 and the wireless LAN modem 30. The portable wireless device 100 is configured to transmit and receive Media Access Control (MAC) service data unit (MSDU) between the application 10 and the wireless LAN modem 30. That is, if the wireless LAN modem 30 receives the MSDU corresponding to data supplied from the application 10, an MAC unit provided in the wireless LAN modem 30 adds a predetermined MAC header and a Physical Layer (PHY) header to the MSDU and modulates them prior to transmission. The wireless LAN modem 30 demodulates a received RF signal, eliminates the PHY header and the MAC header to recover the MSDU, and supplies the MSDU to the application 10.

In the portable wireless device 100 of the exemplary embodiments of the present invention, the MSDU is transmitted and received between the application 10 and the wireless LAN modem 30 in the same manner as the existing portable wireless devices. However, in the exemplary embodiments of the present invention, the power management module 20 is provided between the application 10 and the wireless LAN modem 30 to efficiently manage power consumption during data transmission and reception between the portable wireless device 100 and another portable wireless device.

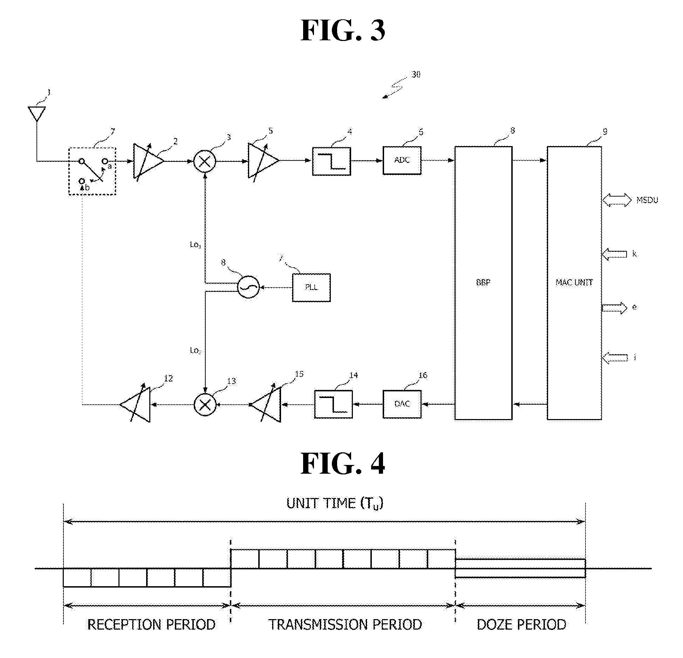

The wireless LAN modem 30 processes an MAC layer and a PHY layer in accordance with the IEEE 802.11 series standard. FIG. 3 illustrates the configuration of the wireless LAN modem 30 according to an exemplary embodiment of the present invention.

The wireless LAN modem 30 includes at least one antenna 1 and a low-noise amplifier (LNA) 2. Although a transmitting antenna and a receiving antenna may separately be provided, the wireless LAN modem 30 further includes a switch 7 if one antenna is used for both transmission and reception, as shown in FIG. 3. Here, the switch 7 switches a transmission mode to a reception mode and vice versa. Referring to FIG. 3, if the wireless LAN modem 30 is switched to a state "a," it is switched to a reception mode. On the other hand, if the wireless LAN modem 30 is switched to a state "b," it is switched to a transmission mode.

In the reception mode, a wireless LAN radio frequency (RF) signal is received by the antenna 1 and amplified by the LNA 2. The amplified RF signal is then output to an orthogonal demodulator 3. The orthogonal demodulator 3 down-converts the RF signal into a baseband signal. To this end, the RF signal is multiplied by a local oscillator signal Lo1.

The local oscillator signal Lo1 is supplied by a voltage controlled oscillator (VCO). A phase-locked loop (PLL) 7 is supplied with an oscillating signal through a feedback by the VCO and sets the phase of the oscillating signal.

The baseband signal supplied by the orthogonal demodulator 3 is input to a variable gain amplifier (VGA) 5. The VGA 5 amplifies the baseband signal through an auto-gain control (AGC). The VGA 5 allows gain control within a range greater than that of the LNA 2. One VGA 5 or a plurality of VGAs may be provided.

A low-pass filter (LPF) 4 performs low-pass filtering on the signal supplied from the VGA 5, to separate a frequency band having actual data from the supplied signal.

An output buffer 6 controls level and delay of the signal supplied from the LPF 4 and supplies the signal to an analog-to-digital converter (ADC) 6. The ADC 6 converts the signal into a digital signal and supplies the digital signal to a baseband processor (BBP) 8.

The BBP 8 processes the digital signal to recover the MPDU and supplies the MPDU to the MAC unit 9. The MAC unit 9 parses the MAC header of the MPDU and supplies data having eliminated with the MAC header, the MSDU, to the application 10.

In the transmission mode, the MAC unit 9 receives the MSDU from the application 10 and adds the MAC header to the MSDU, and then outputs the MSDU having the MAC header to the BBP 8.

The BBP 8 adds a PHY header to the MPDU to generate a PHY protocol data unit (PPDU) and outputs the PPDU to a digital-to-analog converter (DAC) 16. The DAC 16 converts digital data supplied from the BBP 8, i.e., the PPDU, into an analog signal.

The LPF 14 performs low-pass filtering on the signal output from the DAC 16 and extracts a frequency band corresponding to the signal. A VGA 15 amplifies the signal output from the LPF 14 through auto-gain control.

An orthogonal modulator 13 multiplies a local oscillator signal Lo2 supplied from the VCO by the signal output from the VGA 15 and up-converts the signal into an RF signal band.

A power amplifier 12 is a driving amplifier that amplifies the signal output from the orthogonal modulator 13. The amplified signal is then transmitted through the antenna 1 after passing through the switch 7.

The power management module 20 according to an exemplary embodiment of the present invention will now be described in detail with reference to FIG. 2, in which signals "a" to "k" are defined as shown in Table 1.

Table 1 - Signals "a" to "k"

| a | Traffic requirements: average transmission rate, average reception rate, maximum delay time, etc. |
|---|---|
| b | Main parameter for algorithm operation: traffic requirements |
| c | Main parameter for algorithm operation: average transmission rate |
| d | Adjusted data transmission rate for satisfying traffic requirements |
| e | MAC/PHY MIB values provided from wireless LAN modem |
| f | State parameter processed to retrieve energy-performance table |
| g | A set of retrieved optimal control parameter values |

(continued)

| h | Control parameter set command |
|---|---|
| i | Wireless LAN modem control signal for setting control parameter values |
| j | Traffic transmission and reception state information |
| k | Control signal for switching wireless LAN modem to a doze mode and an idle mode |

A traffic-requirement setting unit 21 receives traffic requirements for data transmission and reception from the application 10 and determines a required parameter value.

The traffic-requirement setting unit 21 may receive the traffic requirements through an application programming interface (API) or application-program profile information. The traffic requirements include an average data-transmission rate $R^{req}_{Tx}$ (Mbps), an average data-reception rate $R^{req}_{Rx}$ (Mbps), and a maximum delay time $I^{req}_{delay}$. The average data-transmission rate $R^{req}_{Tx}$ (Mbps) means a transmission rate at which streaming data is transmitted at an average level. The average data-reception rate $R^{req}_{Rx}$ (Mbps) means a reception rate at which streaming data is received at an average level. The maximum delay time means a maximum allowable time required to display streaming data without delay. Therefore, the portable wireless device 100 receives a next streaming data packet before the lapse of the maximum delay time after receiving a previous streaming data packet.

The traffic-requirement setting unit 21 calculates output information from the requirements. The output information includes a unit time $T_u$, average data $L^{avg}_{Tx}$ to be transmitted per unit time, average data $L^{avg}_{Rx}$ to be received per unit time, a maximum reception-mode time $T^{max}_{Rx}$, and a minimum doze time $T^{min}_{doze}$.

The unit time $T_u$ means the greatest value of multiples of a beacon interval $I_b$ within the range of the maximum delay time $I^{req}_{delay}$. For example, supposing that the maximum delay time is 200ms and the beacon interval is 30ms, the unit time $T_u$ will be 180ms.

The average data $L^{avg}_{Tx}$ is obtained by multiplying $R^{req}_{Tx}$ and $T_u$, while the average data $L^{avg}_{Rx}$ is obtained by multiplying $R^{req}_{Rx}$ and $T_u$. An average transmission rate $R^{phy}_{Tx}$ that can actually be set at the PHY node of the portable wireless device 100 is greater than a sum of $R^{req}_{Tx}$ and $R^{req}_{Rx}$, and smaller than the maximum transmission rate of the wireless LAN modem.

The maximum reception-mode time $T^{max}_{Rx}$ means a maximum time in which data is continuously received within the unit time $T_u$. The portable wireless device 100 can be maintained in the reception mode for the time excluding the time for transmitting $L^{avg}_{Tx}$ within the unit time $T_u$. Therefore, $T^{max}_{Rx}$ can be expressed as Equation 1.

$$T^{max}_{Rx} = T_u - \frac{L^{avg}_{Tx}}{R^{req}_{Tx}} \qquad \text{(Equation 1)}$$

The doze time $T^{min}_{doze}$ means a minimum time in the doze mode and the idle mode that has an effect of reducing power consumption. If the time of the doze mode is too short, the energy consumed by switching from the doze mode to the idle mode is greater than the energy consumed in the idle mode. Therefore, if the remaining time in the unit time $T_u$ is less than the doze time, switching to the doze mode can have an effect of reducing power consumption.

A status-parameter collecting unit 24 collects various kinds of status information related to the operation status of a wireless LAN channel from a wireless LAN interface. The status information can be supplied from the wireless LAN modem 30 in a management information base (MIB) type. The status-parameter collecting unit 24 collects required status information from the wireless LAN modem 30 in accordance with a request from a control-parameter determining unit 23. The status-parameter collecting unit 24 processes the status information to obtain a previously defined status parameter and supplies the status parameter to the control-parameter determining unit 23. The status-parameter collecting unit 24 periodically reads the number of fragment transmission times $C_{TxFrags}$ and the total number of retransmission times $C_{retry}$ from the wireless LAN modem 30 and calculates the number of retransmission times $C_{RPF}^{i}$ per frame to be transmitted, in accordance with Equation 2.

$$C_{RPF}^{i} = \frac{C_{retry}^{i} - C_{retry}^{i-1}}{C_{TxFrags}^{i} - C_{TxFrags}^{i-1}} \qquad \text{(Equation 2)}$$

Therefore, information input to the status-parameter collecting unit 24 corresponds to status parameters $[s_1,..,s_l]$ of low level supplied from the wireless LAN modem 30. Information output to the control-parameter determining unit 23 corresponds to status parameters $[S_1,..,S_m]$ processed to be referred to the energy-performance table. The status parameters $[s_1,..,s_l]$ of low level include a Received Signal Strength Indication (RSSI), a short retry count (SRC), a long retry count (LRC), and the number of retransmission times $C_{RPF}$ per frame.

The control-parameter determining unit 23 obtains a value of a control parameter referring to a predetermined energy-performance table 26. Here, the control parameter controls minimization of power required within the range that a given traffic requirement is satisfied based on the wireless LAN status information and traffic requirements. That is, optimized control parameters $[C_1,..,C_n]$ are retrieved in such a manner that the energy-performance table 26 is retrieved based on the status parameters $[S_1,..,S_m]$ and the target data transmission rate $R_{Tx}^{rev}$, each time data is transmitted.

The input information of the control-parameter determining unit 23 corresponds to $R_{Tx}^{rev}$, $[S_1,..,S_m]$ and the retrieved results of the energy-performance table 26, when the output information supplied to a control-parameter application unit 25 corresponds to a set of the retrieved optimized control parameter values. The control parameters $[C_1,..,C_n]$ include parameters shown in Table 2.

Table 2 - Details of Control Parameters

| Title of parameter | Description | Range | Symbol |
|---|---|---|---|
| Tx Rate (including modulation and code) | Transmission rate used during packet transmission | 1 ~ 54 Mbps | $R_{Tx}$ |
| Tx Power | Tx power level consumed during packet transmission | 0 ~ 20 dBm | $P_{Tx}$ |
| dot11RTSThreshold | RTS threshold value | 0~2347 | $K_{RtsThr}$ |
| dot11FragmentatIOnThreshold | Fragmentation threshold value | 256 ~ 2346 | $K_{FragThr}$ |
| dot11ShortRetryLimit | Short Retry Limit | 1 ~ 255 | $K_{SRL}$ |
| dot11LongRetryLimit | Long Retry Limit | 1 ~ 255 | $K_{LRL}$ |

The energy-performance table 26 corresponds to a predetermined trade-off table that has different optimized energy performances set during the manufacturing process. Each row of the table includes power consumption, data transmission rates, values of control parameters, and values of status parameters. The procedure for retrieving the optimized control parameter values by referring to the energy-performance table 26 by the control-parameter determining unit 23 will be described later.

The control-parameter application unit 25 sets the control parameter values that can be controlled by the wireless LAN interface. That is, the control-parameter application unit 25 sets the optimized control parameter values $[C_1,..,C_n]$ supplied from the control-parameter determining unit 23 for each control parameter of the wireless LAN modem 30.

A doze-mode control unit 22 calculates the idle time and switches the wireless LAN to the doze mode for the duration of the idle time in which data transmission and reception traffics through the wireless LAN is monitored. That is, the doze-mode control unit 22 calculates and accumulates the quantity of data transmitted (or received) and the required time based on the traffic requirements, at the time when the data transmission (or reception) is finished. If the time obtained by subtracting the accumulated transmission time and the accumulated reception time from the current unit time is greater than the minimum doze time $T_{doze}^{\min}$, the doze-mode control unit 22 controls the wireless LAN modem 30 to switch to the doze mode for the corresponding time.

Information input from the traffic-requirement setting unit 21 to the doze-mode control unit 22 includes $L_{Tx}^{avg}$, $L_{Rx}^{avg}$, $T_u$, $T_{Rx}^{\max}$, $T_{doze}^{\min}$, $R_{Tx}^{req}$, and $R_{Rx}^{req}$ Information output from the doze-mode control unit 22 to the parameter determining unit 23 includes the target data-transmission rate $R_{Tx}^{rev}$. Information output from the doze-mode control unit 22 to the wireless LAN modem 30 includes a control signal for controlling the wireless LAN modem 30 under the doze mode.

The operation related to the doze-mode control unit 22 will be described in more detail. First, the doze-mode control unit 22 initiates a parameter $L_{Tx}^{acc}$ and a parameter $L_{Rx}^{acc}$ to 0. The parameter $L_{Tx}^{acc}$ represents the accumulated length of the transmission data for the unit time while the parameter $L_{Rx}^{acc}$ represents the accumulated length of the reception data for the unit time.

Next, the doze-mode control unit 22 transmits a PS-Poll frame to the AP through the wireless LAN modem 30 and receives all the data buffered in the AP. The doze-mode control unit 22 continues to receive the data as long as $T_{Rx}^{\max}$ is not exceeded and "more data" bit is included in the MAC header of the received data is 1. The doze-mode control unit 22 transmits all the data in a transmission queue (not shown) from the portable wireless device 100 after the data reception is finished. In this way, after the data reception and transmission, the remaining time $T_u^{left}$ within $T_u$ is calculated to determine whether the remaining time $T_u^{left}$ is greater than $T_{doze}^{\min}$. If the remaining time $T_u^{left}$ is greater than $T_{doze}^{\min}$, the doze-mode control unit 22 continues to control the wireless LAN modem 30 under the doze mode for the remaining time $T_u^{left}$. The remaining time $T_u^{left}$ can be calculated in such a manner that the starting time of $T_u$ is subtracted from the current time and the result is subtracted from $T_u$.

Therefore, each period in which the portable wireless device 100 operates for the unit time $T_u$ is as shown in FIG. 4. As described above, the reception period and the transmission period are collected (i.e., all the data are transmitted after receiving all the data within the unit time) so that the maximum doze period can be obtained.

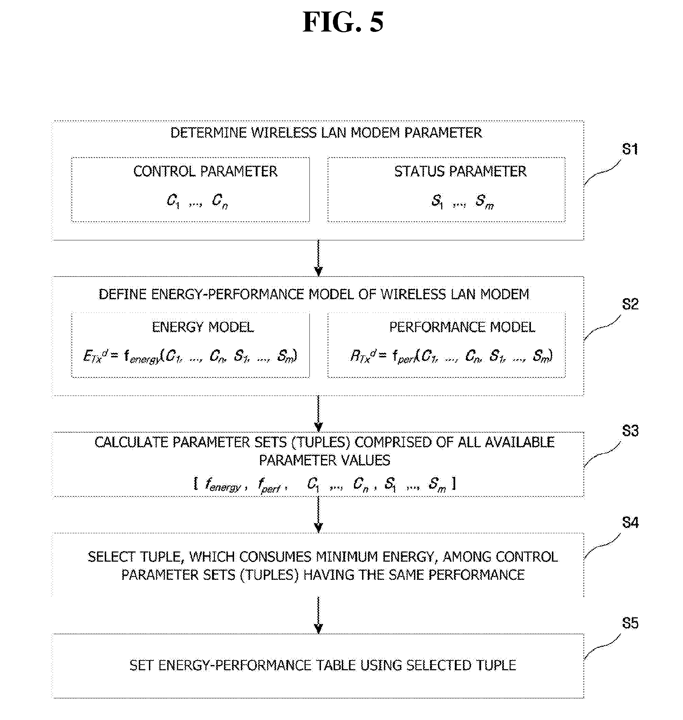

Hereinafter, the method of setting the energy-performance table 26 will be described in detail with reference to FIG. 5. First, parameters of the wireless LAN modem 30 is determined S1. The parameters of the wireless LAN modem 30 includes the control parameters $[C_1,..,C_n]$ and the status parameters $[S_1,..,S_m]$ as mentioned above.

Next, an energy-performance model of the wireless LAN modem 30 is defined S2. In this case, transmission energy $E_{Tx}^d$ is determined by a function $f_{energy}$ having the control parameters and the status parameters as independent parameters. Transmission performance $R_{Tx}^d$ is determined by a function $f_{perf}$ having the control parameters and the status parameters as independent parameters. However, the functions $f_{energy}$ and $f_{perf}$ may be determined by a predetermined algorithm that will be described later. That is, the transmission energy $E_{Tx}^d$ and the transmission performance $R_{Tx}^d$ may be determined in such a manner that the energy and performance corresponding to control parameters having a specific value and status parameters having a specific value are repeatedly measured to obtain an arbitrary control parameter value and an arbitrary status parameter value.

Subsequently, parameter sets (tuples) including all available parameter values are calculated S3. One tuple includes control parameters $[C_1,..,C_n]$, status parameters $[S_1,..,S_m]$, and functions $f_{energy}$ and $f_{perf}$ corresponding to the control parameters and the status parameters. A tuple that corresponds to the least energy consumption is selected from the plurality of tuples S4, and the selected tuple sets an energy-performance table S5.

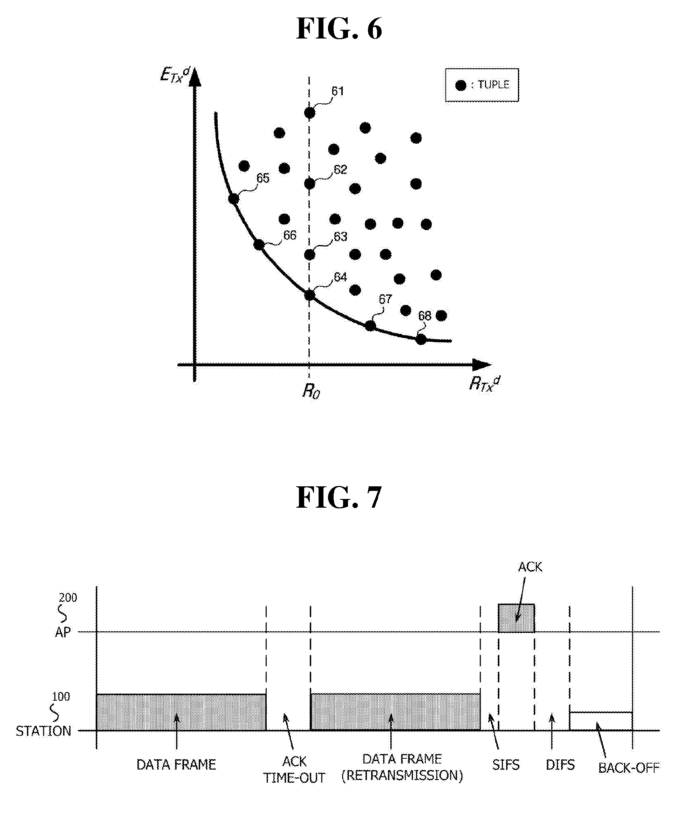

For example, it is assumed that tuples including all available parameter values are displayed on a coordinate plane having a horizontal axis of $R_{Tx}^d$ and a vertical axis of $E_{Tx}^d$ as shown in FIG. 6. In this case, among tuples 61, 62, 63 and 64 having the same corresponding performance $R_0$, the tuple 64 corresponding to the minimum energy consumption is selected in the operation S4. In this way, tuples 64, 65, 66, 67 and 68 that correspond to the least energy consumption under the given performance can be selected in accordance with each performance. These tuples 64, 65, 66, 67 and 68 set the enery-efficiency table.

Hereinafter, a method of obtaining the function $f_{energy}$ defining an energy model and the function $f_{perf}$ defining a performance model will be described in detail. The following table 3 shows four frame patterns divided depending on the packet size $L_d$, request to send (RTS), threshold value $K_{RtsThr}$, and fragmentation threshold value $K_{FragThr}$ in a distributed coordination function (DCF) mode under the IEEE 802.11 series standard.

Table 3 - Four Frame Patterns in DCF Mode

| Case | Condition | RTS/CTS | Fragmen tation | Description |
|---|---|---|---|---|
| 1 | $L_d \leq K_{FragThr}$, $L_d \leq K_{RtsThr}$ | | | Both RTS/CTS frame exchange and fragmentation are not performed. |
| 2 | $L_d \leq K_{FragThr}$, $K_{RtsThr} < L_d$ | O | | RTS/CTS frame exchange is performed but fragmentation is not performed. |
| 3 | $K < L$, $L_d \leq K_{RtsThr}$, | | O | RTS/CTS frame exchange is not performed but fragmentation is performed. |
| 4 | $K_{FragThr} < L_d$, $K_{RtsThr} < L_d$ | O | O | Both RTS/CTS frame exchange and fragmentation are performed. |

Hereinafter, the performance model $E_{Tx}^d = f_{energy}(C_1,..,C_n,S_1,...,S_m)$ and the energy model $R_{Tx}^d = f_{perf}(C_1,..,C_n, S_1,.., S_m)$ for each condition of Table 3 are defined by the following four cases.

## Case 1

In Case 1, both Request To Send/Clear To Send (RTS/CTS) frame exchange and fragmentation are not performed as shown in FIG. 7. Referring to FIG. 7, the portable wireless device 100 has transmitted a data frame to the AP 200 but has not received acknowledgement (ACK) from the AP 200. Thus, the portable wireless device 100 retransmits the data frame to the AP 200. Afterwards, the portable wireless device 100 receives ACK from the AP 200 after Short Inter-Frame Space (SIFS), and undergoes back-off after Distributed Inter-Frame Space (DIFS).

In FIG. 7, $R_{Tx}^d$ can be defined in such a manner that the packet size $L_d$ is divided by the total elapsed time. $R_{Tx}^d$ can be obtained by Equation 3.

$$R_{Tx}^d \cong \frac{L_d}{T_{total}^{Tx}} = \frac{L_d}{(T_d + T_{AckTimeout}) \cdot C_{RPF} + T_d + T_{SIFS} + T_{ack} + T_{DIFS} + T_{CW}} \qquad \text{(Equation 3)}$$

In Equation 3, $T_d$ means a time required to transmit the data frame and $T_{AckTimeout}$ means an ACK time-out time. $T_{SIFS}$ means a time required for SIFS, $T_{DIFS}$ a time required for DIFS, and $T_{ack}$ a time required for ACK transmission. Also, $T_{CW}$ means a time required for a contention window.
$E_{Tx}^d$ means the power consumed during transmission and can be expressed as Equation 4.

$$E_{Tx}^d = E_{PA}^d + E_{RFE}^{Tx,d} + E_{DSP}^{Tx,d} \qquad \text{(Equation 4)}$$

In Equation 4, $E_{Tx}^d$ may be divided into an energy $E_{PA}^d$ consumed by a power amplifier, an energy $E_{DSP}^{Tx,d}$ consumed by a digital signal processor (DSP), and an energy $E_{RFE}^{Tx,d}$ consumed by other units related to transmission.

$E_{PA}^d$ may also be expressed as Equation 5. In Equation 5, $P_{PA}^{Tx}$ means power consumed when the portable wireless device 100 is in the transmission mode, and $P_{PA}^{idle}$ means power consumed when the portable wireless device 100 is in the idle mode.

(Equation 5)

$$E_{PA}^{d} = (P_{PA}^{Tx} \cdot T_d + P_{PA}^{idle} \cdot T_{AckTimeout}) \cdot C_{RPF} + P_{PA}^{Tx} \cdot T_d + P_{PA}^{idle} \cdot (T_{SIFS} + T_{ack} + T_{DIFS} + T_{CW})$$

$E_{RFE}^{Tx,d}$ can be expressed as Equation 6. In Equation 6, it is supposed that one filter, two mixers, two low frequency filters, and two DACs are used for transmitting data.

(Equation 6)

$$E_{RFE}^{Tx,d} = P_{RFE}^{Tx} \cdot T_d \cdot C_{RPF} + P_{RFE}^{Tx} \cdot T_d$$

$$P_{RFE}^{Tx} = P_{filt\_tx} + 2 \cdot P_{mix} + 2 \cdot P_{lpf} + 2 \cdot P_{DAC}$$

$P_{filt\_tx}$, $P_{mix}$, $P_{lpf}$, $P_{DAC}$, and $E_{DSP}^{Tx,d}$ may previously be calculated according to hardware attributes. For example, they may be values specified in basic options of the wireless LAN modem 30.

**Case 2**

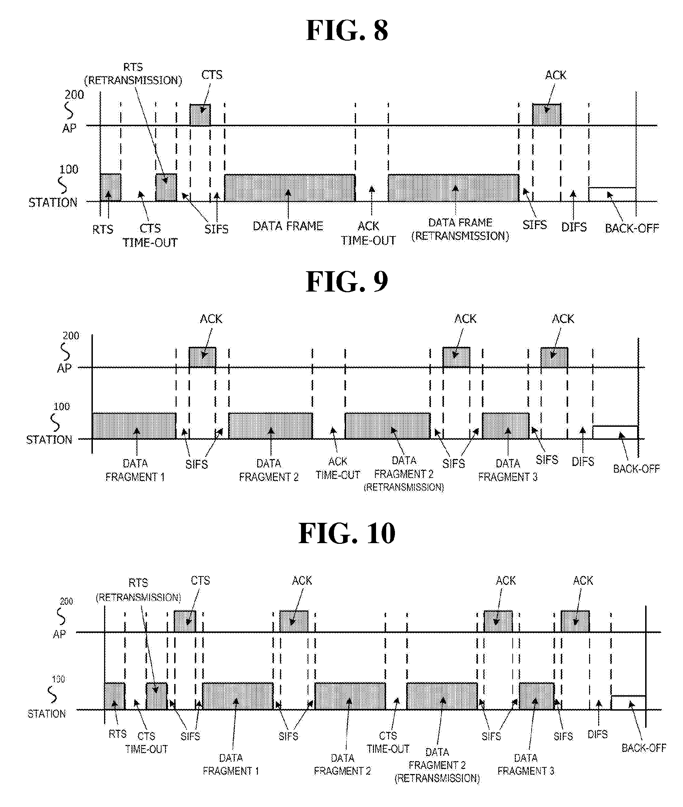

In Case 2, RTS/CTS frame exchange is performed but fragmentation is not performed as shown in FIG. 8. Referring to FIG. 8, the portable wireless device 100 has transmitted RTS frame to the AP 200 but does not receive CTS frame from the AP 200 until CTS time-out time lapses. Thus, the portable wireless device 100 retransmits the RTS frame to the AP 200. Subsequently, the portable wireless device 100 receives the CTS frame from the AP 200 after SIFS, and transmits a data frame to the AP 200 after another SIFS. Here, it is assumed that later operations are the same as those of the case 1.

In FIG. 8, $R_{Tx}^{d}$ can be defined in such a manner that the packet size $L_d$ is divided by the total elapsed time. $R_{Tx}^{d}$ can be expressed by Equation 7.

$$R_{Tx}^{d} \cong \frac{L_d}{T_{total}^{Tx}} = \frac{L_d}{\begin{array}{c}(T_{rts} + T_{CtsTimeout}) \cdot C_{RPF}^{RTS} + T_{rts} + T_{cts} + 2 \cdot T_{SIFS} + \\ (T_d + T_{AckTimeout}) \cdot C_{RPF} + T_d + T_{SIFS} + T_{ack} + T_{DIFS} + T_{CW}\end{array}} \qquad \text{(Equation 7)}$$

In Equation 7, $T_{rts}$ means a time required to transmit the RTS frame, $T_{CtsTimeout}$ CTS a time-out time, and $C_{RPF}^{RTS}$ the number of retransmission times of the RTS frame per frame. $E_{Tx}^{d}$ can be expressed as Equation 4, and referring to FIG. 8, $E_{PA}^{d}$ in Equation 4 can be expressed as Equation 8.

(Equation 8)

$$E_{PA}^{d} = \left(P_{PA}^{Tx} \cdot T_{rts} + P_{PA}^{idle} \cdot T_{CtsTimeout}\right) \cdot C_{RPF}^{RTS} + P_{PA}^{Tx} \cdot T_{rts} + P_{PA}^{idle} \cdot \left(T_{cts} + 2 \cdot T_{SIFS}\right) +$$
$$\left(P_{PA}^{Tx} \cdot T_d + P_{PA}^{idle} \cdot T_{AckTimeout}\right) \cdot C_{RPF} + P_{PA}^{Tx} \cdot T_d + P_{PA}^{idle} \cdot \left(T_{SIFS} + T_{ack} + T_{DIFS} + T_{CW}\right)$$

**Case 3**

In Case 3, RTS/CTS frame exchange is not performed but fragmentation is performed as shown in FIG. 9.

Referring to FIG. 9, the portable wireless device 100 intends to transmit a plurality of data fragments 1, 2 and 3 to the AP 200. However, the portable wireless device 100 does not receive ACK from the AP 200 for ACK time-out time after transmitting the data fragment 2 to the AP 200. Thus, it is assumed that the portable wireless device 100 retransmits the fragment 2 to the AP 200. In this case, $R_{Tx}^d$ can be expressed by Equation 9.

$$R_{Tx}^d \cong \frac{L_d}{T_{total}^{Tx}} = \frac{L_d}{\left(T_{F_i} + T_{AckTimeout}\right) \cdot C_{RPF} + T_{F_i} + 2 \cdot T_{SIFS} + T_{ack}\right) \cdot \left\lfloor \dfrac{L_d}{K_{FragThr}} \right\rfloor + \left(T_{F_n} + T_{AckTimeout}\right) \cdot C_{RPF} + T_{F_n} + T_{SIFS} + T_{ack} + T_{DIFS} + T_{CW}} \quad \text{(Equation 9)}$$

In Equation 9, $T_{Fi}$ means a time required to transmit the data fragment 1 or 2, and $T_{Fn}$ means the last fragment, i.e., a time required to transmit the data fragment 3. Meanwhile, $E_{Tx}^d$ can be expressed as Equation 4, and referring to FIG. 9, $E_{PA}^d$ in Equation 4 can be expressed as Equation 10.

$$\text{(Equation 10)}$$

$$E_{PA}^d = \left(\left(P_{PA}^{Tx} \cdot T_{F_i} + P_{PA}^{idle} \cdot T_{AckTimeout}\right) \cdot C_{RPF} + P_{PA}^{Tx} \cdot T_{F_i} + P_{PA}^{idle} \cdot \left(T_{ack} + 2 \cdot T_{SIFS}\right)\right) \cdot \left\lfloor \dfrac{L_d}{K_{FragThr}} \right\rfloor + \left(P_{PA}^{Tx} \cdot T_{F_n} + P_{PA}^{idle} \cdot T_{AckTimeout}\right) \cdot C_{RPF} + P_{PA}^{Tx} \cdot T_{F_n} + P_{PA}^{idle} \cdot \left(T_{SIFS} + T_{ack} + T_{DIFS} + T_{CW}\right)$$

## Case 4

In the case 4, both RTS/CTS frame exchange and fragmentation are performed as shown in FIG. 10. Referring to FIG. 10, the portable wireless device 100 transmits a plurality of data fragments 1, 2 and 3 to the AP 200 after RTS/CTS frame exchange. In this case, it is assumed that an error occurs during transmission of the first RTS frame and an error also occurs during transmission of the first data fragment 2. At this time, $R_{Tx}^d$ can be expressed by Equation 11.

$$R_{Tx}^d \cong \frac{L_d}{T_{total}^{Tx}} = \frac{L_d}{\left(T_{rts} + T_{CtsTimeout}\right) \cdot C_{RPF}^{RTS} + T_{rts} + T_{cts} + 2 \cdot T_{SIFS} + \left(\left(T_{F_i} + T_{AckTimeout}\right) \cdot C_{RPF} + T_{F_i} + 2 \cdot T_{SIFS} + T_{ack}\right) \cdot \left\lfloor \dfrac{L_d}{K_{FragThr}} \right\rfloor + \left(T_{F_n} + T_{AckTimeout}\right) \cdot C_{RPF} + T_{F_n} + T_{SIFS} + T_{ack} + T_{DIFS} + T_{CW}} \quad \text{(Equation 11)}$$

Meanwhile, $E_{Tx}^d$ can be expressed as Equation 4, and referring to FIG. 10, $E_{PA}^d$ in Equation 4 can be expressed as Equation 12.

(Equation 12)

$$E_{PA}^{d} = \left(P_{PA}^{Tx} \cdot T_{rts} + P_{PA}^{idle} \cdot T_{CtsTimeout}\right) \cdot C_{RPF}^{RTS} + P_{PA}^{Tx} \cdot T_{rts} + P_{PA}^{idle} \cdot \left(T_{cts} + 2 \cdot T_{SIFS}\right) +$$

$$\left(\left(P_{PA}^{Tx} \cdot T_{F_i} + P_{PA}^{idle} \cdot T_{AckTimeout}\right) \cdot C_{RPF} + P_{PA}^{Tx} \cdot T_{F_i} + P_{PA}^{idle} \cdot \left(T_{ack} + 2 \cdot T_{SIFS}\right)\right) \cdot \left\lfloor \frac{L_d}{K_{FragThr}} \right\rfloor +$$

$$\left(P_{PA}^{Tx} \cdot T_{F_n} + P_{PA}^{idle} \cdot T_{AckTimeout}\right) \cdot C_{RPF} + P_{PA}^{Tx} \cdot T_{F_n} + P_{PA}^{idle} \cdot \left(T_{SIFS} + T_{ack} + T_{DIFS} + T_{CW}\right)$$

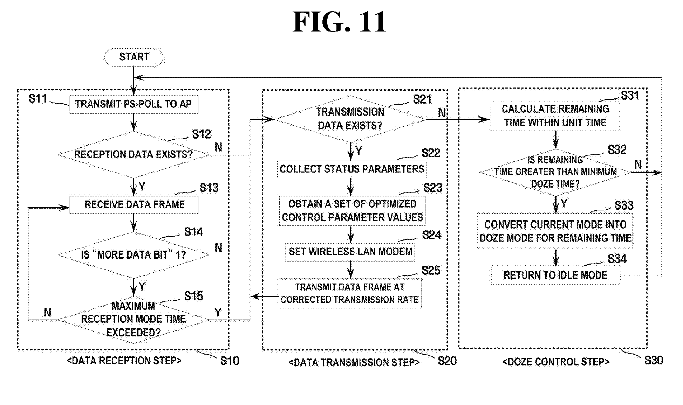

As described above, each component of FIG. 2 or FIG. 3 may mean, but is not limited to, a software or hardware component, such as a field programmable gate-array (FPGA) or application-specific integrated circuit (ASIC). A component may advantageously be configured to reside on the addressable storage medium and configured to execute on one or more processors. The functionality provided for in the components may be separated into additional components or combined into a component that performs a specified function. FIG. 11 is a flowchart illustrating a method of controlling power consumption in a portable wireless device, according to an exemplary embodiment of the present invention. As shown in FIG. 4, the method includes the data reception operation S10, the data transmission operation S20, and the doze control operation S30. The operations are performed based on the greatest value of multiples of the beacon interval $I_b$ within the unit time $T_u$, i.e., within the range of the maximum delay time $I_{delay}^{req}$.

First, in the data reception operation S10, the portable wireless device 100 transmits the PS-Poll frame to the AP 200 and requests data reception S 11. If there are no reception data (N in S12), operation S21 is performed. If there are reception data (Y in S12), the portable wireless device 100 receives the data frame from the AP 200 S 13.

The portable wireless device 100 determines whether the "more data bit" included in the MAC header of the received data frame is 1. If the "more data bit" included in the MAC header of the received data frame is 0 (N in S 14), there is no more data to be received data from the AP 200. In this case, operation S21 is performed. If the "more data bit" included in the MAC header of the received data frame is 1 (Y in S 14), there is more data to be received from the AP 200. In this case, it is determined whether the maximum reception mode time $T_{Rx}^{\max}$ has been exceeded S 15. If the maximum reception mode time $T_{Rx}^{\max}$ has been exceeded (Y in S 15), data reception is stopped even if there is more data to be received, and operation S21 is performed for the transmission operation. If the maximum reception mode time $T_{Rx}^{\max}$ has not been exceeded (N in S 15), the portable wireless device continues to receive the data frame S 13.

In the data transmission operation S20, the portable wireless device 100 determines whether there is data to be transmitted to the AP 200 S21. If there is no data to be transmitted (N in S21), operation S31 is performed. If there is more data to be transmitted (Y in S21), the portable wireless device collects the status parameters through the status-parameter collecting unit 24 S22, and obtains a set of optimized control parameter values for reducing power consumption referring to the collected status parameters and the energy-performance table 26 S23. The portable wireless device applies the obtained control parameter values to the wireless LAN modem 30. Therefore, the wireless LAN modem 30 transmits the data frame at a corrected transmission rate in accordance with the control parameter values S25. Subsequently, the operations prior to the operation S21 are repeated if there is more data to be transmitted during the remaining unit time $T_u$.

If the operation S20 is ended, the operation S30 is performed for the remaining unit time $T_u$. In the doze control operation S30, the portable wireless device 100 calculates the remaining time in the unit time $T_u$ S31. If the remaining time is less than the minimum doze time $T_{doze}^{\min}$ (N of S32), the current operation returns to the operation S11 to perform the operation for the next unit time $T_u$. If the remaining time is greater than the minimum doze time $T_{doze}^{\min}$ (Y of S32), the wireless LAN modem 30 of the portable wireless device 100 switches from the current mode to the doze mode for the remaining time S33. If the remaining time lapses, the portable wireless device 100 returns to the idle mode S34, and the current operation returns to the operation S 11 to perform the operation for the next unit time $T_u$.

To minimize power consumption of the wireless LAN modem, power required for transmission should be properly controlled during data transmission, in addition to implementing a method of reducing duty-cycle. In the duty-cycle reduction method, the wireless LAN modem is switched to the doze mode for the idle time considering the traffic requirements of the application program.

In the exemplary embodiments of the present invention, the idle time is calculated based on the transmission and reception rates and the maximum delay time requirements, and the wireless LAN modem is switched to the doze mode for the calculated idle time. Also, data transmission is performed in such a manner that the actual transmission and reception rates are continuously monitored to calculate the adjusted transmission rate that satisfies the traffic requirements. The control parameter values of the wireless LAN modem are retrieved during data transmission, so as to correspond to the least energy required to satisfy the required data transmission rate, thereby minimizing power consumption.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of controlling power consumption in a wireless device (100), the method comprising:

   receiving at least one frame of data from another wireless device within a range of a maximum reception mode time;
   transmitting at least one frame of data to the other wireless device at an adjusted transmission rate according to traffic requirements or status information of the wireless device (100); and
   switching a current mode of the wireless device (100) to a doze mode for a remaining time of a predetermined unit time.

2. The method of claim 1, wherein the unit time corresponds to a greatest value of multiples of a beacon interval within a range of a maximum delay time requested by an application.

3. The method of claim 2, wherein the portable wireless device (100) is implemented with the IEEE 802.11 series standard, and the other wireless device is an access point.

4. The method of claim 3, wherein the data for transmission and reception is streaming data.

5. The method of claim 3 or claim 4, wherein the receiving at least one frame of data comprises:

   (a) transmitting a PS-Poll frame to the access point;
   (b) receiving the at least one frame of data from the access point when a "more data bit" is 1; and
   (c) repeating the (a) and (b) for the maximum reception mode time.

6. The method of any preceding claim, wherein the transmitting at least one frame of data comprises:

   collecting status parameters of the portable wireless device (100);
   setting an energy-performance table;
   obtaining a set of optimized control parameter values referring to the collected status parameters and the energy-performance table;
   setting a wireless LAN modem (30) of the portable wireless device (100) using the obtained set of optimized control parameter values; and
   transmitting the at least one frame of data to the other wireless device at a transmission rate adjusted by the setting of the wireless LAN modem (30).

7. The method of claim 6, wherein the status parameters include at least one of a received signal strength indication, a short retry count, a long retry count, and the number of retransmission times per frame.

8.  The method of claim 7, wherein the status parameters are supplied from the wireless LAN modem (30) in a management information base type.

9.  The method of any one of claims 6 to 8, wherein the control parameter values include at least one of a packet transmission rate, a Tx power level required for packet transmission, a Request To Send threshold value, a fragmentation threshold value, a short retry limit, and a long retry limit.

10. The method of any one of claims 6 to 11, wherein the setting the energy-performance table comprises:

    defining an energy model and a performance model;
    calculating parameter sets including all available status parameter values;
    selecting a parameter set that corresponds to a least energy consumption based on a same transmission rate from the parameter sets; and
    setting an energy-performance table using the selected parameter set.

11. The method of claim 10, wherein the performance model is defined so that a total time required for data transmission corresponds to the size of the data frame.

12. The method of claim 10 or claim 11, wherein the energy model is defined by a sum of energy consumed by a power amplifier, energy consumed by a digital signal processor, and energy consumed by other units related to data transmission.

13. The method of claim 12, wherein the units related to data transmission include at least one of a mixer, a low-frequency filter, and a digital-to-analog converter.

14. The method of any one of claims 11 to 13, wherein the total time required for data transmission is calculated by multiplying a number of times each frame is retransmitted during data transmission time and an acknowledgement transmission time.

15. The method of any one of claims 11 to 14, wherein the energy consumed by a power amplifier is calculated in such a manner that a number of times each frame is retransmitted is multiplied by a sum of a product of transmission power and a data transmission time and a product of idle power and an acknowledgement transmission time.

16. The method of any preceding claim, wherein the switching the current mode is performed only if the remaining time is greater than a predetermined threshold time.

17. A portable wireless device (100) that is operable to transmit and receive data to and from another wireless device based on a predetermined unit time, the wireless device (100) comprising:

    means for receiving at least one data frame from the other wireless device within a range of a maximum reception mode time;
    means for transmitting at least one data frame to the other wireless device at an adjusted transmission rate according to traffic requirements or status information of the portable wireless device (100); and
    means (22) for switching a current mode of the portable wireless device (100) to a doze mode for a remaining time of the predetermined unit time, after the data have been received and transmitted.

18. A portable wireless device (100) that is operable to transmit and receive data to and from another wireless device based on a predetermined unit time, the wireless device (100) comprising:

    a receiver which is operable to receive at least one data frame from the other wireless device within a range of a maximum reception mode time;
    a transmitter which is operable to transmit at least one data frame to the other wireless device at an adjusted transmission rate according to traffic requirements or status information of the portable wireless device (100); and
    a doze mode control unit (22) which is operable to switch a current mode of the portable wireless device (100) to a doze mode for a remaining time of the predetermined unit time, after the data have been received and transmitted.

**19.** The portable wireless device (100) of claim 18, wherein the unit time corresponds to a greatest value of multiples of a beacon interval within a range of a maximum delay time requested by an application.

**20.** The portable wireless device (100) of claim 18 or claim 19, wherein the device is capable of implementing the IEEE 802.11 series standard.

**21.** The portable wireless device (100) of any one of claims 18 to 20, wherein the device is capable of transmitting and receiving streaming data.

**22.** The portable wireless device (100) of any one of claims 18 to 21 further comprising a wireless Local Area Network modem (30).

# FIG. 1

# FIG. 2

100

| APPLICATION (10) |
| --- |

20

**a**

| TRAFFIC CONDITION SETTING UNIT (21) |
| --- |

**b**      **c**

MSDU

DOZE MODE CONTROL UNIT (22)

**d** → CONTROL PARAMETER DETERMINING UNIT (23)

**g** ← ENERGY-PERFORMANCE TABLE (26)

**f**

**j**

STATUS PARAMETER COLLECTING UNIT (24)

**h** CONTROL PARAMETER APPLICATION UNIT (25)

**k**     **e**     **i**

| WIRELESS LAN MODEM (30) |
| --- |

# FIG. 3

# FIG. 4

UNIT TIME (T$_u$)

RECEPTION PERIOD | TRANSMISSION PERIOD | DOZE PERIOD

# FIG. 5

| DETERMINE WIRELESS LAN MODEM PARAMETER | | S1 |
|---|---|---|
| CONTROL PARAMETER $C_1$ ,..., $C_n$ | STATUS PARAMETER $S_1$ ,..., $S_m$ | |

| DEFINE ENERGY-PERFORMANCE MODEL OF WIRELESS LAN MODEM | | S2 |
|---|---|---|
| ENERGY MODEL $E_{Tx}{}^d = f_{energy}(C_1, ..., C_n, S_1, ..., S_m)$ | PERFORMANCE MODEL $R_{Tx}{}^d = f_{perf}(C_1, ..., C_n, S_1, ..., S_m)$ | |

**CALCULATE PARAMETER SETS (TUPLES) COMPRISED OF ALL AVAILABLE PARAMETER VALUES** — S3

$$[\ f_{energy}\ ,\ f_{perf}\ ,\quad C_1\ ,...,\ C_n\ ,\ S_1\ ,...,\ S_m\ ]$$

**SELECT TUPLE, WHICH CONSUMES MINIMUM ENERGY, AMONG CONTROL PARAMETER SETS (TUPLES) HAVING THE SAME PERFORMANCE** — S4

**SET ENERGY-PERFORMANCE TABLE USING SELECTED TUPLE** — S5

# FIG. 6

# FIG. 7

EP 1 760 894 A2

# FIG. 8

# FIG. 9

# FIG. 10

20

# FIG. 11

```
                              START

S11 ── TRANSMIT PS-POLL TO AP                    TRANSMISSION          N    CALCULATE REMAINING ── S31
                                                  DATA EXISTS? ── S21        TIME WITHIN UNIT TIME
           ┆                  S12                      ┆
      RECEPTION DATA EXISTS?  ──── N                   Y   S22                  IS REMAINING      ── S32
           ┆                                   COLLECT STATUS PARAMETERS   TIME GREATER THAN MINIMUM ── N
           Y                  S13                      ┆                        DOZE TIME?
      RECEIVE DATA FRAME                      OBTAIN A SET OF OPTIMIZED  S23       Y      S33
           ┆                                  CONTROL PARAMETER VALUES     CONVERT CURRENT MODE INTO
           ┆                  S14                     ┆                    DOZE MODE FOR REMAINING TIME
      IS "MORE DATA BIT" 1?  ──── N           SET WIRELESS LAN MODEM  S24        ┆        S34
           ┆                                          ┆                    RETURN TO IDLE MODE
           Y                  S15               TRANSMIT DATA FRAME AT  S25
  N    MAXIMUM                                 CORRECTED TRANSMISSION RATE
       RECEPTION MODE TIME   Y
       EXCEEDED?
       <DATA RECEPTION STEP>   S10    <DATA TRANSMISSION STEP>  S20    <DOZE CONTROL STEP>  S30
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2001075670
- KR 1999065379
- US 5355518 A